# NEUE EUROPÄISCHE PATENTSCHRIFT

(11) **EP 0 319 662 B2**
(45) Veröffentlichungstag und Bekanntmachung des Hinweises auf die Entscheidung über den Einspruch: **07.10.1998**
(45) Hinweis auf die Patenterteilung: 25.03.1992
(21) Anmeldenummer: 88116257.2
(22) Anmeldetag: 30.09.1988
(51) Int. Cl.: B23Q 11/10

(54) **Spindelkopf**
Spindle head
Tête de broche

(30) Priorität: 11.12.1987 DE 3742094
(43) Veröffentlichungstag der Anmeldung: 14.06.1989
(73) Patentinhaber: Hellmerich Werkzeugmaschinen Ges.m.b.H., A-9800 Spittal/Drau (AT)
(72) Erfinder: Kumnig, Franz, D-9872 Millstatt (DE)
(74) Vertreter: Manitz, Finsterwald & Partner

(56) Entgegenhaltungen:
- CH-A- 333 276
- DE-A- 2 509 532
- DE-A- 3 129 403
- DE-A- 3 401 079
- US-A- 3 375 742
- US-A- 3 702 740

## Beschreibung

Die Erfindung betrifft einen Mehrspindelkopf nach dem Oberbegriff des Patentanspruchs 1.

Ein Spindelkopf dieser Art ist aus der CH-A-333 276 bekannt. Bei diesem bekannten Spindelkopf greift in den die Spindel durchsetzenden Axialkanal an dem von der Werkzeugaufnahme abgewandten Ende ein vergleichsweise langes Rohr ein, das in einer Bohrung des Spindelkopfes fixiert ist und mit einer Kühl- oder Schmiermittelquelle in Verbindung steht. Die Länge des in den Spindelkanal eingreifenden Rohres ist dabei so gewählt, daß eine Axialverschiebung der Spindel relativ zu dem feststehenden Rohr möglich ist und dabei die Kühl- oder Schmiermittelzufuhr nicht gestört wird.

Nachteilig bei dieser bekannten Anordnung ist vor allem, daß sich aufgrund der Durchmesserverhältnisse von feststehendem Rohr und Axialbohrung in der Spindel unerwünschte Beschränkungen hinsichtlich des erzielbaren Speisedrucks ergeben und daß vor allem Probleme im Zusammenhang mit der Spaltleckage auftreten, da im Bereich des Übergangs von dem einen geringeren Strömungsquerschnitt aufweisenden Rohr zu dem größeren Strömungsquerschnitt der Axialbohrung der Spindel Strömungsunstetigkeiten und Wirbelbildungen auftreten, die das Eindringen von Kühl- oder Schmiermittel in den Spalt zwischen Rohr und Spindel begünstigen, und zwar um so ausgeprägter, je höher der Speisedruck und/oder die Spindeldrehzahl gewählt wird bzw. werden.

Aufgabe der Erfindung ist es, einen Spindelkopf der eingangs angegebenen Art unter Erhalt seiner konstruktiven Einfachheit so auszubilden, daß insbesondere auch bei höchsten Drehzahlen eine hohe Lebensdauer gewährleistet ist und eine Minimierung der Leckagen erreicht wird.

Gelöst wird diese Aufgabe nach der Erfindung durch die Merkmale des Patentanspruchs 1.

Durch die Schaffung eines im wesentlichen stufenfreien Strömungsübergangs zwischen dem feststehenden rohrförmigen Abschnitt und der rotierenden Spindel und die Ausbildung eines der Spaltdichtung vorgeschalteten Verbindungs- bzw. Strömungsberuhigungsraums der im Vergleich zu dem eigentlichen Strömungskanal einen vergrößerten Querschnitt aufweist, wird eine überraschende Leckageverringerung auch bei hohem Druck und hoher Spindeldrehzahl erreicht. Der sich in der Spaltdichtung ergebende, ausgeprägte Druckabbau hat dann auch zur Folge, daß die Spindel-Dichtringe nur mit geringem Druck beaufschlagt werden, was zu einer wesentlichen Erhöhung der Lebensdauer führt.

Bevorzugt ist die Spaltdichtung als Rückfördergewinde derart ausgebildet, daß bei sich drehender Spindel eine der Strömungsrichtung in der Spaltdichtung entgegengerichtete Förderwirkung erzielt wird. Auf diese Weise kann der jeweils gewünschte Druckabbau unter Berücksichtigung des verwendeten Drucks des zugeführten Kühl- und/oder Schmiermittels jeweils definiert und optimal vorgegeben werden.

Das Verbindungselement kann als Schraubelement oder mit Befestigungsflansch versehenes Element ausgebildet sein, aber es ist gleichermaßen möglich, dieses Verbindungselement in das Verbindungsgehäuse unmittelbar zu integrieren und einteilig mit dem Spindelgehäuse auszuführen.

Das Spindelende ist im Koppelbereich von zwei beabstandeten Dichtringen umschlossen, wobei in den zwischen den beiden Dichtringen gelegenen Bereich eine Testbohrung mündet und im Bereich des Spindelendes zumindest eine sich durch das Spindelgehäuse erstreckende Entlastungsbohrung mündet. Über die Entlastungsbohrung wird überschüssiges Kühl- und/oder Schmiermittel ab- bzw. rückgeführt. Die Testbohrung ermöglicht es, eine evtl. schadhaft gewordene Dichtung zu ermitteln, da ein Austreten von Kühl- und/oder Schmiermittel an der Testbohrung ein Anzeichen dafür darstellt, daß ein Dichtungswechsel erforderlich ist.

Weitere besonders vorteilhalte Ausgestaltungen der Erfindung sind in Unteransprüchen angegeben.

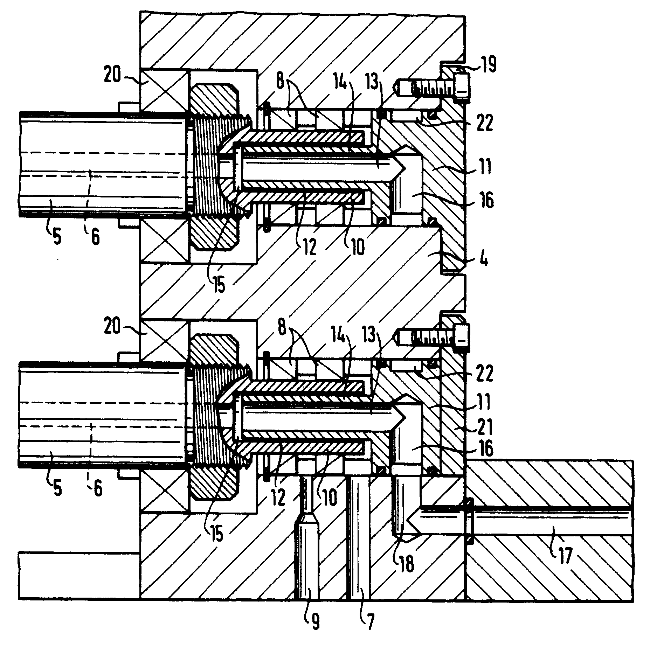

Die Erfindung wird nachfolgend anhand eines Ausführungsbeispiels unter Bezugnahme auf die Zeichnung erläutert.

Die einzige Figur der Zeichnung zeigt eine schematische Teildarstellung eines Mehrspindelkopfs, wobei zwei gleichartig ausgebildete Spindelköpfe zu sehen sind.

In einem teilweise dargestellten Spindelgehäuse 4 sind mehrere Spindeln, deren Antrieb nicht gezeigt ist, drehbar gelagert, und diese Spindeln sind mit einem durchgehenden Axialkanal 6 versehen, über den eine Zuführung von Kühl- und/oder Schmiermittel zu den jeweiligen Bohr- und/oder Schneidwerkzeugen erfolgt.

Die Zuführung des von einer unter Druck stehenden Quelle kommenden Kühl- und/oder Schmiermittels geschieht über eine Kühlmittelzuführleitung 17 sowie im Gehäuse ausgebildete Bohrungen 18, welche jeweils mit einer Querbohrung 16 in Verbindung stehen, die in einem Verbindungselement 11 ausgebildet ist, das über eine Spaltdichtung 12 mit der zugehörigen Spindel 5 gekoppelt ist und einen Axialkanal 13 aufweist, so daß sich zwischen der Kühlmittelzuführleitung 17 und dem Axialkanal 6 in der Spindel 5 ein durchgehender Strömungsweg ergibt.

Das Verbindungselement 11 ist in einer zylindrischen Gehäusebohrung angeordnet, mit seinem Kopfteil bezüglich der Bohrungswandung abgedichtet und mit einem rohrförmigen Abschnitt 14 versehen, der sich unter Ausbildung der bereits erwähnten Spaltdichtung 12 in eine koaxial zum Axialkanal 6 der Spindel 5 verlaufende zylindrische Erweiterung 15 am Spindelende 10 erstreckt. Diese zylindrische Erweiterung 15 besitzt größeren Durchmesser als der Axialkanal 6, und im Bereich der Spaltdichtung 12 ist der Außendurchmesser des Spindelendes vorzugsweise etwas verringert. so daß gegenseitig beabstandete Dichtringe 8 ohne Schwierigkeiten in der zylindrischen Bohrung angeordnet werden können, die das Kopfteil des Verbindungselements 11 aufnimmt.

Die gegenseitig beabstandeten Dichtringe 8 sind vorzugsweise PTFE-beschichtet, und die Lauffläche des Spindelendes 10, die mit diesen Dichtringen 8 zusammenwirkt, ist bevorzugt mit Chromoxid beschichtet.

Zwischen den beiden Dichtringen 8 mündet eine sich durch das Gehäuse 4 erstreckende Testbohrung 9, mittels der es möglich ist, eventuelle Schadhaftigkeit eines Dichtrings sofort festzustellen, da in diesem Falle über die Testbohrung 9 Kühl-und/oder Schmiermittel austreten würde.

Die endseitig in einem Lager 20 gelagerte Spindel 5 steht über ihren Axialkanal 6 demgemäß derart mit einer unter vergleichsweise hohem Druck stehenden Quelle von Kühl- und/oder Schmiermittel in Verbindung, daß die Dichtringe 8 nur wenig mit Druck belastet sind, da es die eine erhebliche Längsabmessung aufweisende Spaltdichtung 12 gestattet, den Druck in dem jeweils gewünschten Maße abzubauen. Wird die Spaltdichtung mit einem Rückfördergewinde ausgebildet, so kann gezielt ein Druckabbau entsprechend den jeweiligen Forderungen stattfinden.

Am freien Spindelende aus der Spaltdichtung 12 austretendes Kühl- und/oder Schmiermittel wird über eine Entlastungsbohrung7ab- bzw. rückgeführt.

Das Verbindungselement 11 ist in seinem Kopfbereich vorzugsweise mit einer Ringnut 22 versehen, in die die Querbohrung 18 mündet. Auf diese Weise wird Einbau und Positionierung des Verbindungselements absolut unkritisch, da keine Ausrichtvorgänge erforderlich sind.

Das Verbindungselement 11 kann mit dem Gehäuse 4 verschraubt oder über einen Flansch 19 verbunden werden. In diesen Fällen erfolgt die Montage des Verbindungselements 11von der Gehäuserückseite her, aber es ist auch möglich, mit einem endseitig geschlossenen Gehäuse zu arbeiten, wie dies mit dem Bezugszeichen 21 angedeutet ist, und das Verbindungselement von der Spindelseite her in die entsprechende Aufnahmebohrrung einzuführen.

Dieses zweckmäßigerweise aus Bronze hergestellte Verbindungselement ist im Falle der Befestigung über eine Schraub- oder Flanschverbindung besonders einfach von außen zugänglich.

## Patentansprüche

1. Mehrspindelkopf mit einer Anordnung zur Versorgung der jeweiligen Bohr- und/oder Schneidwerkzeuge mit Kühl- und/oder Schmiermittel,
wobei jede der in einem gemeinsamen Spindelgehäuse (4) angeordneten Spindeln (5) mit einem durchgehenden, in der Werkzeugauf nahme mündenden Axialkanal (6) versehen ist,
welcher an dem von der Werkzeugaufnahme entfernten freien Spindelende (10) über ein Verbindungselement (11) an eine unter einem vorgebbaren Druck stehende Kühl- und/oder Schmiermittelquelle angeschlossen ist,
das freie Spindelende (10) und das Verbindungselement (11) in Axialrichtung ineinandergreifend und unter Ausbildung einer Spaltdichtung (12) gekoppelt sind,
die das Kühl- und/oder Schmiermittel führenden Kanäle (6, 13) in der Spindel und im Verbindungselement zumindest im Koppelbereich im wesentlichen koaxial zueinander verlaufen,
das Verbindungselement (11) einen rohrförmigen Abschnitt (14) aufweist,
der koaxial zum Axialkanal (6) in die im Koppelbereich einen verringerten Außendurchmesser aufweisende Spindel (5) eingreift und dessen Kanal (13) in eine im Verbindungselement (11) ausgebildete Querbohrung (16) mündet,
und wobei für alle Kühl- und/oder Schmiermittel führenden, untereinander in Verbindung stehenden Gehäusebohrungen eine gemeinsame Zuführleitung (17) vorgesehen ist,
dadurch **gekennzeichnet,**
daß der rohrförmige Abschnitt (14) des Verbindungselements (11) in eine koaxial zum Axialkanal (6) der Spindel (5) verlaufende, einen größeren Durchmesser als der Axialkanal (6) aufweisende zylindrische Erweiterung (15) am Spindelende (10) mit geringem Spiel eingreift,
daß zwischen dem Boden der zylindrischen Erweiterung (15) und dem Ende des in diese Erweiterung (15) eingreifenden rohrförmigen Abschnitts (14) ein Verbindungsraum ausgebildet ist, dessen axiale Abmessung ein Mehrfaches des Spaltdichtungsmaßes zwischen rohrförmigem Abschnitt (14) und Spindelende (10) beträgt,
daß alle einzelnen Spindeln (5) zugeordnetenKoppelbereiche in einem gemeinsamen, eine Gehäuserückwand bildenden Gehäuseteil (4) gelegen sind,
daß die Spindel (5) in dem einen verringerten Außendurchmesser aufweisenden Koppelbereich von zwei beabstandeten Dichtringen (8) umschlossen ist und im Bereich des Spindelendes (10) zumindest eine sich durch das Gehäuse erstreckende Entlastungsbohrung (7) mündet, und
daß die untereinander in Verbindung stehenden Gehäusebohrungen (18) in dem gleichen Gehäuseteil (4) wie die Koppelbereiche vorgesehen sind und über Querbohrungen (16) in einem Kopfteil des Verbindungselements (11) in den Axialkanal (13) münden.

2. Mehrspindelkopf nach Anspruch 1,
dadurch **gekennzeichnet,**
daß die Spaltdichtung (12) als Rückfördergewinde ausgebildet ist, derart, daß bei sich drehender Spindel (5) eine der Strömungsrichtung in der Spaltdichtung (12) entgegengerichtete Förderwirkung erzielt wird.

3. Mehrspindelkopf nach einem der vorhergehenden Ansprüche,
dadurch **gekennzeichnet,**
daß das Verbindungselement (11) über einen Flansch (19) mit dem Spindelgehäuse (4) verschraubt und der Außendurchmesser des Flansches (19) etwa gleich dem Außendurchmesser der die Spindel (5) endseitig umschließenden Lager (20) ist.

4. Mehrspindelkopf nach einem der Ansprüche 1 bis 3,
dadurch **gekennzeichnet,**
daß das Verbindungselement (11) von einem gesonderten Schraubdeckel gehalten ist, der in eine entsprechende Öffnung des Spindelgehäuses (4) einschraubbar ist.

5. Mehrspindelkopf nach Anspruch 1 oder 2,
dadurch **gekennzeichnet,**
daß das Verbindungselement von der Spindelseite her eingesetzt und auf der von der Spindel (5) abgewandten Seite direkt oder indirekt an einer durchgehenden, nicht abnehmbaren Wand (21) des Spindelgehäuses (4) abgestützt ist.

6. Mehrspindelkopf nach einem der vorhergehenden Ansprüche,
dadurch **gekennzeichnet,**
daß das als Einsatz ausgebildete Verbindungselement (11) aus Bronze besteht.

7. Mehrspindelkopf nach Anspruch 1,
dadurch **gekennzeichnet,**
daß in den zwischen den beiden Dichtringen (8) gelegenen Bereich eine Testbohrung (9) mündet.

8. Mehrspindelkopf nach einem oder mehreren der vorhergehenden Ansprüche,
dadurch **gekennzeichnet,**
daß die Dichtringe (8) aus PTFE-beschichteten Ringen bestehen und
daß die Lauffläche der Spindel (5) mit Chromoxid beschichtet ist.

9. Mehrspindelkopf nach einem der Ansprüche 8 oder 9,
dadurch **gekennzeichnet,**
daß der Querschnitt der Entlastungsbohrung (7) größer ist als der freie Strömungsquerschnitt der Testbohrung (9).

## Claims

1. Multiple spindle head comprising an arrangement for the supply of the respective boring and/or cutting tools with coolant and/or lubricant, wherein each of the spindles (5) arranged in a common spindle housing (4) is provided with a through-going axial channel (6) opening into the tool mount, the channel being connected at the free spindle end (10) remote from the tool mount via a connection element (11) to a source of coolant and/or lubricant which stands under a predeterminable pressure, wherein the free spindle end (10) and the connection element (11) are interengagingly coupled in the axial direction while forming a gap seal (12), wherein the channels (6, 13) in the spindle and in the connecting element guiding the coolant and/or lubricant extend substantial coaxial to one another, at least in the coupling region, wherein the connection element (11) has a tubular section (14) which engages coaxially to the axial channel (6) into the spindle (5) which has a reduced outer diameter in the coupling region, and the channel (13) of the connection element opens into a cross bore (16) formed in the connection element (11), and wherein a common supply line (17) is provided for all housing bores which conduct coolant and/or lubricant and which communicate with one another,
characterized in that
the tubular portion (14) of the connection element (11) engages with small clearance into a cylindrical broadened portion (15) at the spindle end (10), with the cylindrical broadened portion (15) extending coaxially to the axial channel (6) of the spindle (5) and having a larger diameter than the axial channel (6), in that a connection chamber is formed between the base of the cylindrical broadened portion (15) and the end of the tubular section (14) which engages into this broadened portion (15), with the axial dimension of the connection chamber amounting to a multiple of the gap sealing dimension between the tubular portion (14) and the spindle end (10), in that all coupling regions associated with the individual spindles (5) are disposed in a common housing part (4) forming a housing rear wall; in that the spindle (5) is surrounded in the coupling region having a reduced outer diameter by two spaced apart sealing rings (8) and at least one relief bore (7) extending through the housing opens into the region of the spindle end (10), and in that the housing bores (18) which communicate with one another are provided in the same housing part (4) as the coupling regions and open via bores (16) in a head part of the connection element (11) into the axial channel (13).

2. Spindle head in accordance with claim 1,
characterized in that
the gap seal (12) is realized as a return thread, such that when the spindle (5) is rotating, a conveying effect is achieved opposite to the flow direction in the gap seal (12).

3. Spindle head in accordance with one of the preceding claims,
characterized in that
the connection element (11) is screwed to the spindle housing (4) via a flange (19) and the outer diameter of the flange (19) is approximately equal to the outer diameter of the bearing (20) which surrounds the spindle (5) at its end.

4. Spindle head in accordance with one of the preceding claims,
characterized in that
the connection element (11) is held by a separate screw cap which is screwable into a corresponding opening of the spindle housing (4).

5. Spindle head in accordance with one of the preceding claims,
characterized in that
the connection element (11) is inserted from the spindle side and is supported directly or indirectly at the side remote from the spindle (5) on a continuous non-removable wall (21) of the spindle housing (4).

6. Spindle head in accordance with one of the preceding claims,
characterized in that
the connection element (11) formed as an insert is made of bronze.

7. Spindle head in accordance with claim 9,
characterized in that
a test bore (9) opens into the region located between the two sealing rings (8).

8. Spindle head in accordance with one or more of the preceding claims,
characterized in that
the sealing rings (8) consist of PTFE-coated rings; and in that the running surface of the spindle (5) is covered with chromium oxide.

9. Spindle head in accordance with one or more of the preceding claims,
characterized in that
the cross section of the relief bore (7) is larger than the free flow cross section of the test bore (9).

## Revendications

1. Tête de broches multiples, comprenant une disposition d'alimentation de chaque outil de perçage et/ou de coupe en agent de refroidissement et/ou de lubrification,
chacune des broches (5) disposées dans un logement commun (4) de broches comporte un canal axial continu (6) qui débouche dans un logement d'outil
et qui est raccordé à l'extrémité libre (10) de chaque broche qui est distante du logement d'outil par un élément de raccord (11) à une source d'agent de refroidissement et/ou de lubrification qui est sous une pression prescrite,
l'extrémité libre (10) de chaque broche et l'élément de raccord (11) étant assemblés en direction axiale par emboîtement et avec formation d'un joint en labyrinthe (12),
les canaux (6, 13) de la broche et de l'élément de raccord par lesquels circule l'agent de refroidissement et/ou de lubrification étant sensiblement coaxiaux au moins dans la zone d'assemblage,
l'élément de raccord (11) comprenant un tronçon tubulaire (14)
qui pénètre coaxialement au canal axial (6) dans la broche (5) qui a un diamètre extérieur réduit dans la zone d'assemblage et dont le canal (13) débouche dans un trou transversal (16) réalisé dans l'élément de raccord (11)
et un conduit commun d'arrivée (17) étant prévu pour tous les trous du logement qui communiquent les uns avec les autres et dans lesquels circule l'agent de refroidissement et/ou de lubrification,
caractérisée
en ce que le troncon tubulaire (14) de l'élément de raccord (11) pénètre avec faible jeu dans un élargissement cylindrique (15) de l'extrémité (10) de la broche, qui est coaxial au canal axial (6) de la broche (5) et qui a un diamètre plus grand que celui du canal axial (6),
en ce qu'une chambre de raccord, dont la cote axiale correspond à un multiple de la cote du joint en labyrinthe situé entre le tronçon tubulaire (14) et l'extrémité (10) de la broche, est réalisée entre le fond de l'élargissement cylindrique (15) et l'extrémité du tronçon tubulaire (14) pénétrant dans cet élargissement (15),
en ce que toutes les zones d'assemblage associées aux broches individuelles (5) sont situées dans un élément commun de logement formant une paroi arrière de logement,
en ce que la broche (5) est entourée dans la zone d'assemblage ayant un diamètre extérieur réduit de deux bagues d'étanchéité (8) distantes l'une de l'autre et au moins un trou de décharge (7) passant à travers le logement débouche dans la zone de l'extrémité (10) de la broche et
en ce que les trous (18) du logement qui communiquent les uns avec les autres sont prévus dans la même partie du logement (4) que les zones d'assemblage et débouchent dans le canal axial (13) par l'intermédiaire de trous transversaux (16) situés dans une partie de tête de l'élément de raccord (11).

2. Tête de broches multiples selon la revendication 1,
caractérisée
en ce que le joint en labyrinthe (12) est conformé en filetage de transport en retour de manière à obtenir un effet de transport dans le sens opposé au sens de la circulation dans le joint en labyrinthe (12) qui est provoquée par la rotation de la broche (5).

3. Tête de broches multiples selon l'une des revendications précédentes,
caractérisée
en ce que l'élément de raccord (11) est vissé par une bride (19) sur le logement (4) des broches et le diamètre extérieur de la bride (19) est sensiblement égal au diamètre extérieur des paliers (20) qui entourent la broche (5) sur le côté de son extrémité.

4. Tête de broches multiples selon l'une des revendications 1 à 3,
caractérisée
en ce que l'élément de raccord (11) est tenu par un couvercle fileté séparé qui peut se visser dans une ouverture correspondante du logement (4) des broches.

5. Tête de broches multiples selon la revendication 1 ou 2,
caractérisée
en ce que l'élément de raccord se monte par le côté broche et prend appui sur le côté tourné à l'opposé de celui de la broche (5) directement ou indirectement contre une paroi continue non amovible (21) du logement (4) des broches.

6. Tête de broches multiples selon l'une des revendications précédentes,
caractérisée
en ce que l'élément de raccord (11) conformé en pièce rapportée est en bronze.

7. Tête de broches multiples selon la revendication 1,
caractérisée
en ce qu'un trou de test (9) débouche dans la zone située entre les deux bagues d'étanchéité (8).

8. Tête de broches multiples selon l'une ou plusieurs des revendications précédentes,
caractérisée
en ce que les bagues d'étanchéité (8) consistent en des anneaux revêtus de PTFE et en ce que la surface de glissement de la broche (5) est revêtue d'oxyde de chrome.

9. Tête de broches multiples selon l'une des revendications 8 ou 9,
caractérisée
en ce que la section transversale du trou de décharge (7) est supérieure à la section transversale libre d'écoulement du trou de test (9).
